# EUROPEAN PATENT SPECIFICATION

(11) **EP 2 829 462 B1**
(45) Date of publication and mention of the grant of the patent: **21.12.2016**
(21) Application number: 13187174.1
(22) Date of filing: 02.10.2013
(51) Int. Cl.: B62J 33/00, B62J 99/00, B62K 21/24, B62K 23/04

(54) **Heatable handle jacket for a vehicle**
Beheizbare Griffummantelung für ein Fahrzeug
Gaine de poignée chauffante destinée à un véhicule

(30) Priority: 23.07.2013 TW 102213821
(43) Date of publication of application: 28.01.2015
(73) Proprietor: Tong Yah Electronic Technology Co., Ltd., 709 Tainan City (TW)
(72) Inventor: Wang, Po Shuan, 709 Tainan City (TW)
(74) Representative: Lang, Christian

(56) References cited:
- EP-A1- 1 555 198
- EP-A1- 1 939 080
- US-A1- 2004 011 777
- US-A1- 2009 065 491

## Description

### BACKGROUND OF THE INVENTION

The present invention relates to a handle jacket for a vehicle and, more particularly, to a heatable handle jacket for a vehicle.

The hands of drivers of vehicles such as motorcycles, snowmobiles, skibobs, or the like are less nimble in cold zones. The handles of such vehicles are liable to deteriorate due to low temperatures, adversely affecting the function of the handles. To avoid these problems, the vehicles are equipped with a heatable handle jacket to provide heat through supply of electricity.

To allow easy maneuver by the driver, an annular frame is mounted around the jacket and includes three frames together defining an upwardly facing opening for receiving a controller by which the driver can control on/off of the heatable handle jacket with his or her thumb, providing enhanced maneuverability.

However, the controller must be mounted to an end of the jacket through the annular frame comprised of three frames such that the controller is apt to disengage from the jacket. Furthermore, the heatable handle jacket has many elements causing inconvenient, time-consuming assemblage. Furthermore, water is apt to enter an interior of the heatable handle jacket via gaps between the frames.

US 2009/065491 A1 discloses, according to the preamble of claim 1, a heated hand grip for motorcycles or snow mobiles including a printed circuit board disposed in the internal of an insulated housing of the hand grip, a resistive heating element connected to the printed circuit board, and a control circuit mounted on the printed circuit board. By turning the control knob the user can drive the control circuit to adjust the electric power applied to the resistive heating element, and consequently regulate the heating power of the resistive heating element and the temperature of the heated hand grip, wherein the user can choose between different heating levels by switching the control knob from a switched off mode to several predefined discrete heating levels.

US 2004/011777 A1 discloses heated motorcycle handgrips including a housing, a heating element, a control unit and a control knob. By turning the control knob the user can drive the control unit to regulate the electric power applied to the heating element and consequently regulate the heating power the heating element transfers to the handgrip, wherein the heating levels can be adjusted in a continuous manner.

EP 1 939 080 A1 discloses a hand grip member with an electrical heater comprising a housing, a heating wire disposed inside the housing and connected to power source and a control switch, wherein the user can switch the control switch of the heater from switched off mode to switched on mode to apply electrical power to the heating wire and consequently heat the hand grip.

EP 1 555 198 A1 discloses a heated motorcycle handgrip wherein a controller is not embedded on said handgrip and wherein the display element (LEDs) indicates the amount of current in the heating cell device.

Thus, a need exists for a novel heatable handle jacket that mitigates and/or obviates the above disadvantages.

### BRIEF SUMMARY OF THE INVENTION

A heatable handle jacket according to the present invention includes a jacket adapted to be mounted around a handle of a vehicle. The jacket is made of a thermally conductive material and includes an end having an outer surface with a recessed portion. A heating unit includes a heating wire mounted inside the jacket or to an inner side of the jacket. A controller is embedded in the recessed portion and electrically connected to the heating unit to control heating operation of the heating wire.

Preferably, the controller includes a protrusion. The recessed portion includes a wall having a groove in which the protrusion is engaged.

Preferably, the controller includes a temperature indicator for indicating a temperature of the heating wire. The temperature indicator faces an opening of the recessed portion.

Preferably, the jacket includes an inner sleeve and an outer sleeve mounted around the inner sleeve. The inner sleeve is adapted to be mounted around the handle of the vehicle. The outer sleeve is made of the thermally conductive material. The heating wire is mounted between the inner and outer sleeves.

Preferably, the heating wire extends helically around the inner sleeve.

Preferably, the outer sleeve is made of an elastomeric material.

Preferably, a bonding layer is filled between the controller and the recessed portion.

By forming the recessed portion in the outer sleeve, the controller is less likely to fall off from the jacket. Furthermore, the heatable handle jacket has fewer elements than conventional heatable handle jackets, allowing easy assemblage and saving the time for assemblage and installation. Furthermore, the bonding layer avoids water from entering into a gap between the controller and the recessed portion, preventing damage while further avoiding disengagement of the controller.

The present invention will become clearer in light of the following detailed description of illustrative embodiments of this invention described in connection with the drawings.

### DESCRIPTION OF THE DRAWINGS

The illustrative embodiments may best be described by reference to the accompanying drawings where:
FIG. 1 is a perspective view of a heatable handle jacket according to the present invention.
FIG. 2 is a partially exploded perspective view of the heatable handle jacket of FIG. 1.
FIG. 3 is a perspective view of an inner handle of the heatable handle jacket of FIG. 1.
FIG. 4 is a cross sectional view of the heatable handle jacket of FIG. 1.

### DETAILED DESCRIPTION OF THE INVENTION

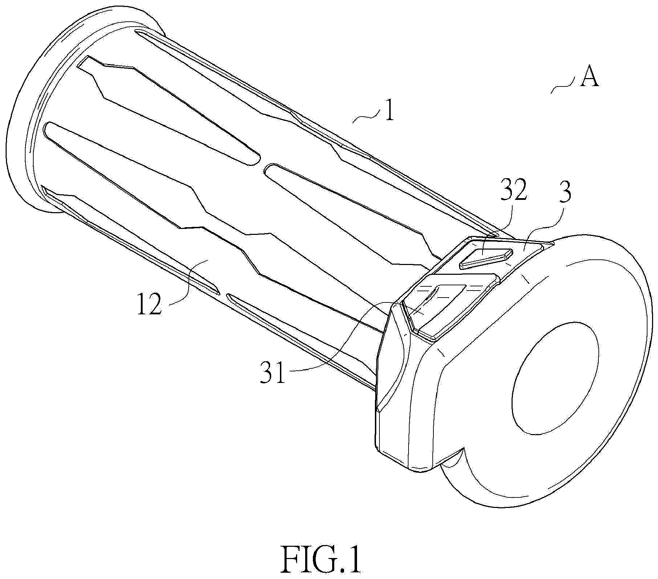

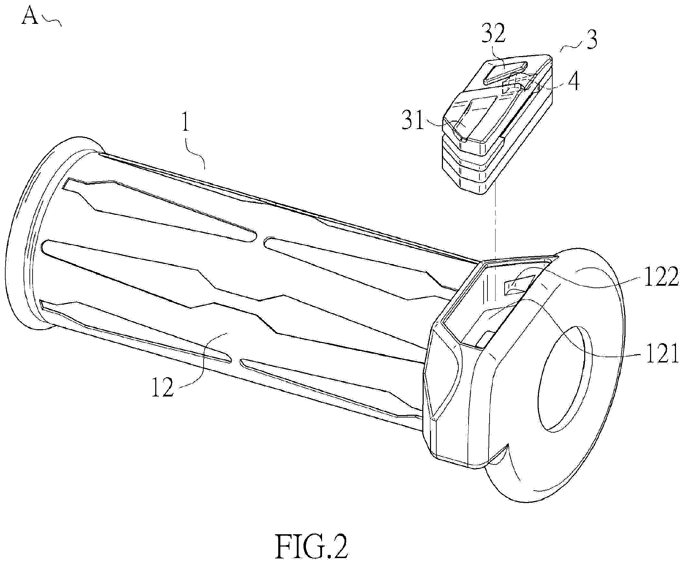

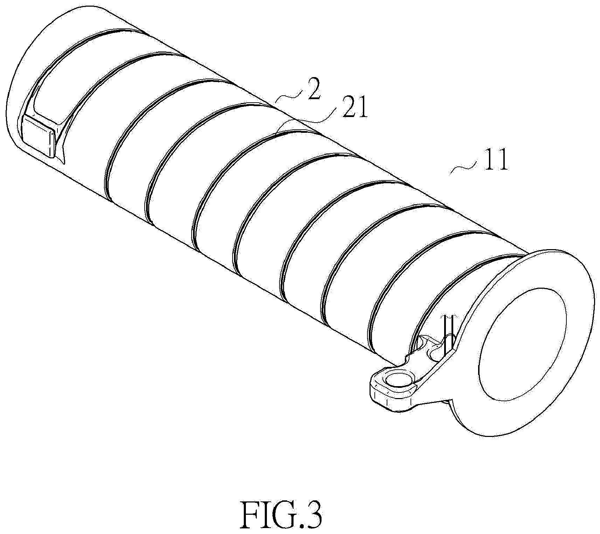

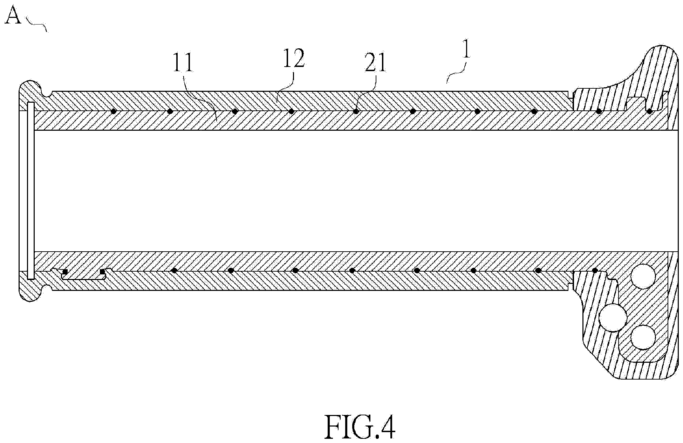

A heatable handle jacket according to the present invention is shown in FIGS. 1-4 and designated A. The heatable handle jacket A includes a jacket 1 adapted to be mounted around a handle of a vehicle, such as a motorcycle. In the form shown, the jacket 1 includes an inner sleeve 11 to be mounted around the handle of the vehicle and an outer sleeve 12 mounted around the inner sleeve 11. The outer sleeve 12 is made of a thermally conductive material. The outer sleeve 12 includes an end having an outer surface with a recessed portion 121. The recessed portion 121 includes a wall having a groove 122. The outer sleeve 12 made of elastomeric material provides the driver with a comfortable touch, which is advantageous over the conventional heatable handle jacket comprised of rigid frames.

The heatable handle jacket A further includes a heating unit 2 having a heating wire 21. The heating wire 21 is mounted inside the jacket 1 or to an inner side of the jacket 1. The inner side of the jacket 1 contacts with the handle of the vehicle after the jacket 1 is mounted around the handle of the vehicle. In the form shown, the heating wire 21 is mounted between the inner and outer sleeves 11 and 12 and preferably on an outer periphery of the inner sleeve 11. Since the outer sleeve 12 is made of a thermally conductive material, the heat can be transmitted through the heating wire 21 to the outer sleeve 12 gripped by the driver. Thus, the hands of the driver will not feel cold while driving in winter or cold weather. The heating wire 21 extends helically around the inner sleeve 11 to provide uniform heating.

The heatable handle jacket A further includes a controller 3 embedded in the recessed portion 121. The controller 3 preferably includes a protrusion 4 on an outer side thereof. The protrusion 4 is engaged in the groove 122 of the recessed portion 121, preventing the controller 3 from disengaging from the jacket 1.

The controller 3 is electrically connected to the heating unit 2. The driver can control heating operation (such as turning on or off the heating function or adjusting the temperature of the heating wire 21) by a button 31. The controller 3 further includes a temperature indicator 32 on the outer side thereof for indicating the temperature of the heating wire 21 or the jacket 1. The temperature indicator 32 faces an opening of the recessed portion such that the driver can immediately know the temperature of the heatable handle jacket A.

The temperature indicator 32 can show the driver the temperature of the heatable handle jacket A by showing a change in color. Alternatively, the temperature indicator 32 can be of digital type showing the temperature value. Other forms of temperature indicator 32 can be used.

By forming a recessed portion 121 in the outer sleeve 12, the controller 3 is less likely to fall off from the jacket 1. Furthermore, the heatable handle jacket A has fewer elements than conventional heatable handle jackets, allowing easy assemblage and saving the time for assemblage and installation. Furthermore, a bonding layer can be filled between the controller 3 and the recessed portion 121 to avoid water from entering into a gap between the controller 3 and the recessed portion 121, preventing damage while further avoiding disengagement of the controller 3.

Although specific embodiments have been illustrated and described, numerous modifications and variations are still possible without departing from the scope of the invention. The scope of the invention is limited by the accompanying claims.

## Claims

1. A heatable handle jacket (A) comprising:
a jacket (1) adapted to be mounted around a handle of a vehicle, with the jacket (1) made of a thermally conductive material, with the jacket (1) including an end having an outer surface with a recessed portion (121);
a heating unit (2) including a heating wire (21) mounted inside the jacket (1) or to an inner side of the jacket (1); and
a controller (3) embedded in the recessed portion (121), with the controller (3) electrically connected to the heating unit (2) to control heating operation of the heating wire (21),
**characterized in that**
the controller (3) includes a temperature indicator (32), with the temperature indicator (32) indicating a temperature of the heating wire (21), with the temperature indicator (32) facing an opening of the recessed portion (121).

2. The heatable handle jacket (A) as claimed in claim 1, with the controller (3) including a protrusion (4), with the recessed portion (121) including a wall having a groove (122), with the protrusion (4) engaged in the groove (122) of the recessed portion (121).

3. The heatable handle jacket (A) as claimed in claim 1, with the jacket (1) including an inner sleeve (11) and an outer sleeve (12) mounted around the inner sleeve (11), with the inner sleeve (11) adapted to be mounted around the handle of the vehicle, with the outer sleeve (12) made of the thermally conductive material, with the heating wire (21) mounted between the inner and outer sleeves (11, 12).

4. The heatable handle jacket (A) as claimed in claim 3, with the heating wire (21) extending helically around the inner sleeve (11).

5. The heatable handle jacket (A) as claimed in claim 4, with the outer sleeve (12) made of an elastomeric material.

6. The heatable handle jacket (A) as claimed in claim 1, further comprising: a bonding layer filled between the controller (3) and the recessed portion (121).

## Patentansprüche

1. Beheizbare Griffummantelung (A) umfassend:
einen Mantel (1), der angepasst ist, um um einen Lenker eines Fahrzeugs montiert zu werden, wobei der Mantel (1) aus einem thermisch leitfähigen Material gefertigt ist, und wobei der Mantel (1) ein Ende mit einer äußeren Fläche mit einem Aussparungsbereich (121) umfasst,
eine Heizeinheit (2), die einen Heizdraht (21) aufuveist, die innerhalb des Mantels (1) oder an einer Innenseite des Mantels (1) ausgebildet ist, und
einen Kontrolleur (3), der in dem Aussparungsbereich (121) eingebettet ist, wobei der Kontroller (3) elektrisch mit der Heizeinheit (2) verbunden ist, um den Heizprozess des Heizdrahts (21) zu kontrollieren,
**dadurch gekennzeichnet, dass**
der Kontrolleur (3) eine Temperaturanzeige (32) umfasst, wobei die Temperaturanzeige (32) eine Temperatur des Heizdrahts (21) anzeigt, und wobei die Temperaturanzeige (32) einer Öffnung des Aussparungsbereichs (121) zugewandt ist.

2. Beheizbare Griffummantelung (A) nach Anspruch 1, bei der der Kontroller (3) einen Vorsprung (4) aufweist, wobei der Aussparungsbereich (121) eine Wand mit einer Nut (122) aufweist, und wobei der Vorsprung (4) in die Nut (122) des Aussparungsbereichs (121) eingreift.

3. Beheizbare Griffummantelung (A) nach Anspruch 1, bei der der Mantel (1) eine innere Hülse (11) und eine äußere Hülse (12) aufweist, die um die innere Hülse (11) herum montiert ist, wobei die innere Hülse (11) angepasst ist, um um den Lenker eines Fahrzeugs herum montiert zu werden, wobei die äußere Hülse (12) aus thermisch leitfähigem Material gefertigt ist, und wobei der Heizdraht (21) zwischen den inneren und äußeren Hülsen (11,12) montiert ist.

4. Beheizbare Griffummantelung (A) nach Anspruch 3, bei der der Heizdraht (21) sich helixförmig um die innere Hülse (11) herum erstreckt.

5. Beheizbare Griffummantelung (A) nach Anspruch 4, bei der die äußere Hülse (12) aus einem Elastomermaterial gefertigt ist.

6. Beheizbare Griffummantelung (A) nach Anspruch 1, ferner umfassend eine Verbindungsschicht, die zwischen den Kontroller (3) und den Aussparungsbereich (121) gefüllt ist.

## Revendications

1. Housse de poignée pouvant être chauffée (A) comprenant :
une housse (1) adaptée pour être montée autour de la poignée d'un véhicule, avec la housse (1) faite en un matériau thermoconducteur, avec la housse (1) comprenant une extrémité qui a une surface extérieure avec une portion renfoncée (121) ;
une unité chauffante (2) comprenant un fil chauffant (21) monté à l'intérieur de la housse (1) ou à un côté intérieur de la housse (1) et
un contrôleur (3) encastré dans la portion renfoncée (121), avec le contrôleur (3) relié électriquement à l'unité chauffante (2) pour contrôleur l'opération de chauffage du fil chauffant (21),
**caractérisé en ce que** le contrôleur (3) comprend un indicateur de température (32), avec l'indicateur de température (32) qui indique une température du fil chauffant (21), avec l'indicateur de température (32) qui fait face à une ouverture de la portion encastrée (121).

2. Housse de poignée pouvant être chauffée (A) selon la revendication 1, avec le contrôleur (3) qui comprend une saillie (4), avec la portion renfoncée (121) qui comprend une paroi qui a une rainure (122), avec la saillie (4) en prise dans la rainure (122) de la portion renfoncée (121).

3. Housse de poignée pouvant être chauffée (A) selon la revendication 1, avec la housse (1) qui comprend un manchon intérieur (11) et un manchon extérieur (12) monté autour du manchon intérieur (11), avec le manchon intérieur (11) adapté pour être monté autour de la poignée du véhicule, avec le manchon extérieur (12) fait en matériau thermoconducteur, avec le fil chauffant (21) monté entre le manchon intérieur et le manchon extérieur (11, 12).

4. Housse de poignée pouvant être chauffée (A) selon la revendication 3, avec le fil chauffant (21) qui s'étend en spirale autour du manchon intérieur (11).

5. Housse de poignée pouvant être chauffée (A) selon la revendication 4 avec le manchon extérieur (12) fait en un matériau élastomère.

6. Housse de poignée pouvant être chauffée (A) selon la revendication 1 comprenant de plus : une couche de liaison remplie entre le contrôleur (3) et la portion renfoncée (121),
